# EUROPEAN PATENT SPECIFICATION

(11) **EP 4 357 052 B1**
(45) Date of publication and mention of the grant of the patent: **28.10.2026**
(21) Application number: 22824800.1
(22) Date of filing: 01.06.2022
(51) Int. Cl.: G05B 19/416, B23B 25/02, B23Q 15/12, B23Q 15/013, G05B 19/409, B23B 9/08

(54) **VIBRATION-CUTTING CONDITION SETTING DEVICE FOR MACHINE TOOL**
VORRICHTUNG ZUR EINSTELLUNG DER VIBRATIONSSCHNEIDEBEDINGUNG FÜR EINE WERKZEUGMASCHINE
DISPOSITIF DE RÉGLAGE DE CONDITIONS DE COUPE PAR VIBRATIONS POUR MACHINE-OUTIL

(30) Priority: 17.06.2021 JP 2021100567
(43) Date of publication of application: 24.04.2024
(73) Proprietor: Star Micronics Co., Ltd., Shizuoka-shi, Shizuoka 422-8654 (JP)
(72) Inventor: UMEHARA, Nozomi, Shizuoka-shi, Shizuoka 422-8654 (JP); KAMO, Shotaro, Shizuoka-shi, Shizuoka 422-8654 (JP)
(74) Representative: Grünecker Patent- und Rechtsanwälte PartG mbB
(86) International application number: PCT/JP2022/022257
(87) International publication number: WO 2022/264807

(56) References cited:
- WO-A1-2018/117203
- JP-A- 2019 185 260
- JP-A- 2020 204 945
- JP-A- 2021 066 005
- KR-A- 20200 131 734
- US-A1- 2020 094 327
- US-A1- 2020 401 108

## Description

### TECHNICAL FIELD

The present invention relates to a vibration-cutting condition setting device for a machine tool capable of cutting a workpiece with a tool while the workpiece is gripped by a spindle.

### BACKGROUND ART

An NC (numerical control) lathe provided with the spindle is known as a kind of the machine tool. A long swarf produced from the workpiece as rotated with the spindle might have an influence on machining performance. Vibration-cutting is known as a method for breaking up a swarf or chip by alternately repeating an advancing feed and a returning feed. The advancing feed is a feed of the tool in a direction toward the workpiece. The returning feed is a feed of the tool in a direction away from the workpiece. Breaking-up performance varies according to a spindle phase, a vibration amplitude, an advancing feed speed, and a returning feed speed. An operator sets the parameters to allow the NC lathe to perform vibration-cutting.

The machining system disclosed in Patent Document 1 generates a first waveform data representing a change in positional information of a feed axis with a lapse of time according to time series positional information at regular time intervals. The first waveform data is divided into a plurality of partial waveform data for every time per rotation of the spindle. Each of the partial waveform data is sequentially shifted in the time base direction to match the starting point of the first waveform. The machining system thereby generates a plurality of second waveform data for display. Further relevant prior art is described in US 2020/ 094327 A, KR 2020 01311734 A and US 2020/401108 A1.

### PRIOR ART DOCUMENT

### PATENT DOCUMENT

Patent Document 1: Japanese Patent Application Publication No.2018-195002

### TECHNICAL SOLUTION

Genarally, a cutting tool has a recommended setting of an upper limit such as the maximum feed speed to prevent brakage or welding of the tool. In vibration-cutting, the tool may be controlled to be fed with vibration according to a non-vibration feed speed of the tool, a vibration cycle parameter and a vibration amplitude parameter. Without knowledge of the maximum feed speed of the tool in the advancing feed, the operator could not properly select a tool nor properly set the vibration-cutting parameters. Such problems resides in a variety of machine tools including a machining center.

The present invention discloses a vibration-cutting condition setting device facilitating the selection of the tool and the setting of the parameters.

The invention is defined by claim 1, which comprises an arrangement of a vibration-cutting condition setting device and a machine tool. Optional aspects of the invention are provided by dependent claims 2-3.

The invention facilitates the selection of the tool and the setting of the parameters for vibration-cutting.

### BRIEF DESCRIPTION OF THE DRAWINGS

FIG. 1 schematically shows a configuration of a machine tool.
FIG. 2 is a block diagram schematically showing a configuration of an electrical circuit of the machine tool.
FIG. 3 schematically shows a tool position with respect to a spindle rotation angle in the case that a chip length coefficient A1 equals two.
FIG. 4 schematically shows a tool position with respect to a spindle phase in the case that the chip length coefficient A equals two.
FIG. 5 schematically shows a tool position with respect to a spindle rotation angle in the case that the chip length coefficient A equals three.
FIG. 6 schematically shows a tool position with respect to a spindle rotation angle controlled according to a vibration feed command.
FIG. 7 schematically shows a tool position with respect to a spindle rotation angle in the case that the chip length coefficient A equals 2/3.
FIG. 8 schematically shows a tool position with respect to a spindle phase in the case that the chip length coefficient A equals 2/3.
FIG. 9 schematically shows an example of a setting screen of a vibration feed command CM1.
FIG. 10 schematically shows an example of an information table.
FIG. 11 schematically shows an example of a setting screen accepting a change of a maximum feed speed Fmax.
FIG. 12 schematically shows an example of a setting screen of a vibration feed command CM2.
FIG. 13 schematically shows a tool position with respect to a spindle rotation angle.

### MODE FOR INVENTION

Hereinafter, an embodiment of the present invention will be described. The embodiment is only an example of the invention. The features disclosed in the embodiments may not necessarily all be required to solve the problem.

### (1) Summary of technology of the invention

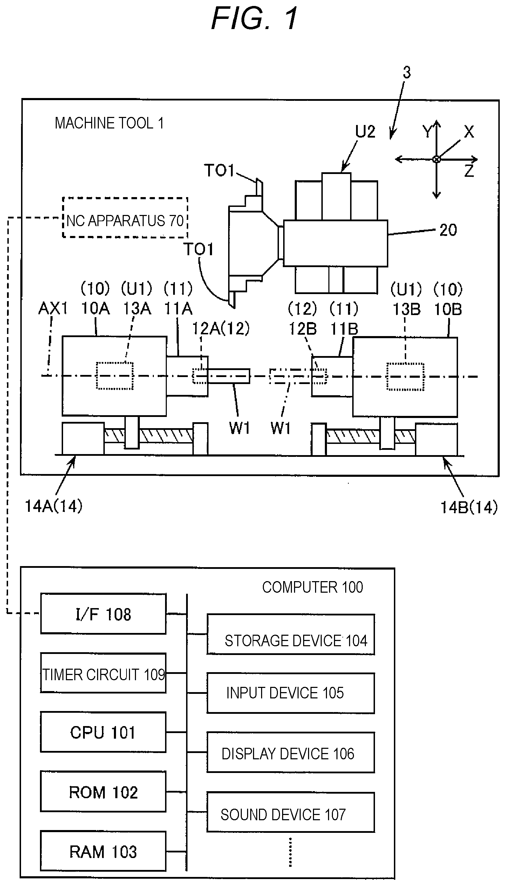

Technology of the invention is being summarized referring FIG. 1 to FIG. 13. The drawings only schematically show examples of the invention. The magnification may be different and the drawings may not match to each other. Any element of the technology may not be limited to the specific element denoted by a symbol.

### [Embodiment 1]

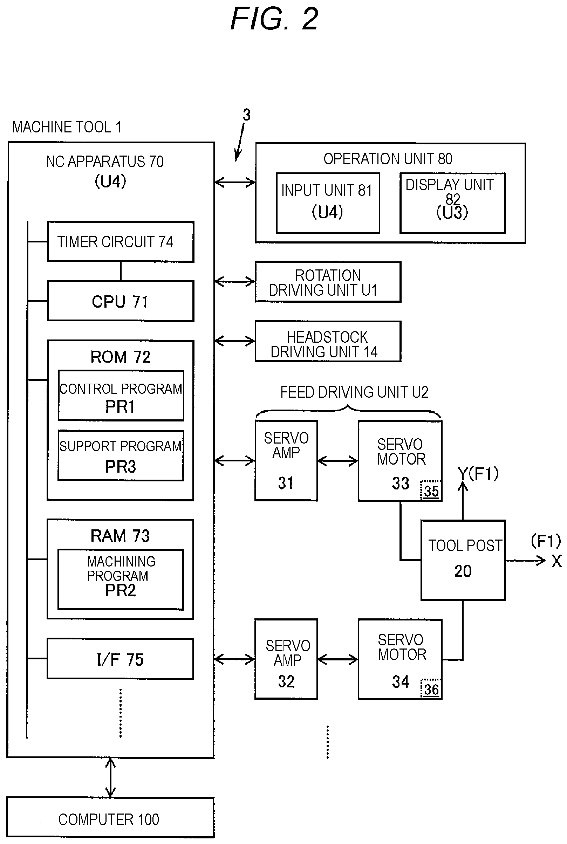

As shown in FIG. 1 and FIG. 2, a machine tool 1 of an embodiment of the invention is provided with a rotation driving unit U1 and a feed driving unit U2. The rotation driving unit U1 rotates a spindle 11 gripping a workpiece W1. The feed driving unit U2 feeds at least one object (a tool TO1, for example). The object may include the spindle 11 and the tool TO1 for cutting the workpiece W1. The machine tool 1 controls the tool TO1 to be fed with a vibration along a cutting direction (a feed axis F1, for example). The vibration includes an advancing feed M1 of the tool TO1 in the direction toward the workpiece W1 and a returning feed M2 of the tool TO1 in the direction opposite to the direction of the advancing feed M1. A vibration-cutting condition setting device 3 for the machine tool 1 includes a display unit U3 and a control unit U4. The control unit 4 accepts a setting for feeding the target with the vibration. The setting includes a feed speed without the vibration (F) of the target, a first parameter (A) regarding a cycle of the vibration, and a second parameter (E) regarding an amplitude of the vibration. The control unit U4 calculates a maximum feed speed (Fmax) of the target according to the feed speed without the vibration (F), the first parameter (A), and the second parameter (E). The control unit U4 then displays a value representing the calculated maximum feed speed (Fmax) on the display unit U3.

The embodiment allows the operator to see the maximum feed speed (Fmax) on the display unit U3, which is not known from the accepted settings. The embodiment facilitates the selection of the tool TO1 for vibration-cutting and the setting of parameters for vibration-cutting. The embodiment can provide a vibration-cutting condition setting device capable of facilitating the selection of the tool and the setting of the vibration-cutting parameters.

The machine tool may include a lathe and a machining center. The feed driving unit may feed the tool along the cutting direction without feeding the workpiece, may feed the workpiece along the cutting direction without feeding the tool, or may feed both of them along the cutting direction. The first parameter (A) regarding a cycle of the vibration may not be limited to a cycle itself and may be any parameter related to the cycle. The first parameter (A) may include a chip length coefficient A1 and a cycle A2. The second parameter (E) regarding an amplitude of the vibration may not be limited to an amplitude itself and may be any parameter related to an amplitude. The second parameter (E) may include a returning amount E1 and an amplitude A2. The value representing the maximum feed speed may not be limited to a value in a unit of mm/rev. It may be a calculated value of a ratio of the maximum feed speed to the normal-cutting feed speed. It may be a calculated value of a difference between the maximum feed speed and the normal-cutting feed speed. The remarks described above may be applied to the following embodiments.

### [Embodiment 2]

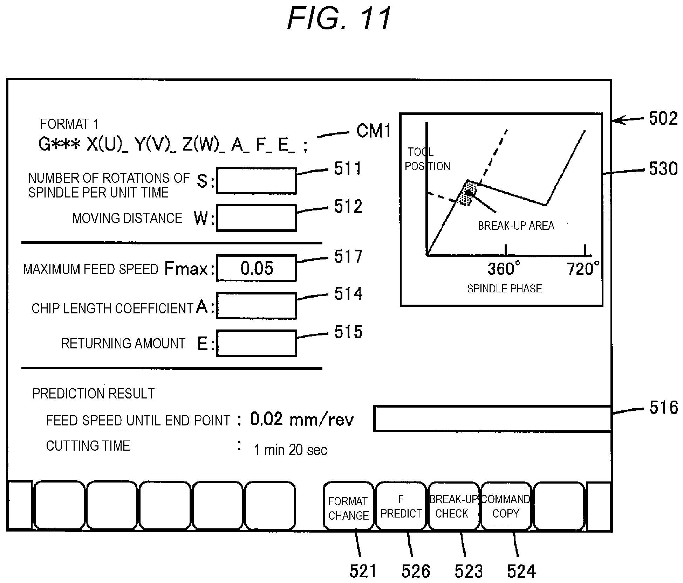

As shown in FIG. 11, the control unit U4 may accept an operation for changing the maximum feed speed (Fmax) shown on the display unit U3. The control unit U4 may change the feed speed without the vibration (F) according to the updated maximum feed speed (Fmax), the first parameter (A), and the second parameter (E). The control unit U4 may display the updated feed speed without the vibration (F) on the display unit U3. The embodiment allows the operator to change the maximum feed speed (Fmax) according to any selected tool and to see the updated feed speed without the vibration (F) on the display unit U3. The embodiment thus facilitates the setting of the feed speed without the vibration (F). The feed speed without the vibration may not be limited to a value in a unit of mm/rev. It may be a calculated value of a ratio of the updated feed speed without the vibration to the original feed speed without the vibration. It may be a calculated value of a difference between the updated feed speed without the vibration and the original feed speed without the vibration. The remarks described above may be applied to the following embodiments.

### [Embodiment 3]

As shown in FIG. 11, the control unit U4 may calculate a cutting time (CT) required for feeding the target with the vibration at the updated maximum feed speed (Fmax) according to the updated maximum feed speed (Fmax), the first parameter (A) and the second parameter (E). The control unit U4 may display the calculated cutting time (CT) on the display unit U3. The embodiment allows the operator to change the maximum feed speed (Fmax) according to any selected tool and to see the cutting time (CT) at the updated maximum feed speed (Fmax) on the display unit U3. The cutting time may not be limited to a value in a unit of min. It may be a calculated value of a ratio of the updated cutting time to the original cutting time. It may be a calculated value of a difference between the updated cutting time and the original cutting time. The remarks described above may be applied to the following embodiments.

### [Embodiment 4]

The control unit U4 may accept an operation for changing the cutting time (CT) required for feeding the target with the vibration. The control unit U4 may change at least one of the feed speed parameters and display the updated feed speed parameter on the display unit U3. The feed speed parameters include the feed speed without the vibration (F) and the maximum feed speed (Fmax). The embodiment allows the operator to see the updated feed speed parameter according to a change in the cutting time (CT). The embodiment facilitates the setting of the vibration-cutting parameters.

### (2) Example of machine tool configuration

FIG. 1 schematically shows a configuration of a lathe as an example of the machine tool 1 and an external computer 100. The machine tool 1 may be an NC (Numerical Control) lathe provided with an NC apparatus 70. The computer 100 is not essential for the machine tool 1. The computer 100 may or may not be connected to the machine tool 1. The machine tool 1 includes the vibration-cutting condition setting device 3.

The machine tool 1 may include a headstock 10 incorporating the spindle 11 provided with a gripping part 12, a headstock driving unit 14, a tool post 20, the feed driving unit U2 for the tool post 20, and the NC apparatus 70. The headstock 10 is a collective name covering a front headstock 10A and a back headstock 10B. The front headstock 10A may incorporate a front spindle 11A provided with a gripping part 12A. The gripping part 12A may be a collet. The back headstock 10B may incorporate a back spindle 11B provided with a gripping part 12B. The gripping part 12B may be a collet. The spindle 11 is a collective name covering the front spindle 11A and the back spindle 11B. The gripping part 12 is a collective name covering the gripping part 12A and the gripping part 12B. The headstock driving unit 14 is a collective name covering a front headstock driving unit 14A for driving the front headstock 10A and a back headstock driving unit 14B for driving the back headstock 10B. The rotation driving unit U1 for the spindle 11 may include a motor 13A for rotating the front spindle 11A around a spindle axis AX1 and a motor 13B for rotating the back spindle 11B around the spindle axis AX1. The motor 13A and the motor 13B may be built in the spindle or externally provided.

The control axis of the machine tool 1 may include an X-axis represented by "X", a Y-axis represented by "Y", and a Z-axis represented by "Z". The direction of the Z-axis may be a horizontal direction along the spindle axis AX1 around which the workpiece W rotates. The direction of the X-axis may be a horizontal direction perpendicular to the Z-axis. The direction of the Y-axis may be a vertical direction perpendicular to the Z-axis. The Z-axis and the X-axis may necessarily cross each other but not necessarily be perpendicular. The Z-axis and the Y-axis may necessarily cross each other but not necessarily be perpendicular. The X-axis and the Y-axis may necessarily cross each other but not necessarily be perpendicular. Any drawing referred herein shows an example only for explanation of the invention, therefore never limiting the scope of the invention. Any positional description is only an example. The invention includes reverse directions and reverse rotations. The same direction covers exactly the same direction and almost the same direction allowing for a margin of error. The same position covers exactly the same position and almost the same position allowing for a margin of error.

The machine tool 1 in FIG. 1 is a lathe of spindle-sliding type. The front headstock driving unit 14A may drive the front headstock 10A in the Z-axis direction while the back headstock driving unit 14B may drive the back headstock 10B in the Z-axis direction. The machine tool 1 may be a lathe of spindle-stationary type that the front headstock 10A does not move. The back headstock 10B may not necessarily move while the front headstock 10A may move in the Z-axis direction.

The front spindle 11A may releasably grip the workpiece W1 with the gripping part 12A. The front spindle 11A gripping the workpiece W1 may be rotatable around the spindle axis AX1. A long cylindrical (bar) material, a brand new workpiece, may be supplied from the rear side (left side in FIG. 1) of the front spindle 11A toward the gripping part 12A. A guide bush may be provided on the front side (right side in FIG. 1) of the front spindle 11A to support the workpiece W slidably in the Z-axis direction. A short material may be supplied from the front side toward the gripping part 12A. The motor 13Amay rotate the front spindle 11A gripping the workpiece W around the spindle axis AX1. The workpiece W whose front end has been machined may be delivered to the back spindle 11B. The back spindle 11B may releasably grip the workpiece W with the gripping part 12B. The motor 13B may rotate the back spindle 11B gripping the workpiece W around the spindle axis AX. Upon completion of back side machining, the workpiece W may be discharged as a product.

The plurality of tools TO1 may be attached to the tool post 20. The tool post 20 may be movable in the X-axis direction and the Y-axis direction, respectively. The X-axis direction or the Y-axis direction is an example of the feed axis F1. The tool post 20 may be movable in the Z-axis direction. The tool post 20 may be a turret tool post or a gang tool post. The plurality of tools TO1 may include a turning tool such as a cut-off tool and a rotary tool such as a drill and an endmill. In this embodiment, the object to be driven by the feed driving unit U2 may be the tool TO1. The feed driving unit U2 may move the tool TO1 along the feed axis F1. The feed axis F1 may be an imaginary axis that interpolates between the X-axis and the Y-axis. When the tool post 20 having the tool TO1 attached is movable also in the Z-axis direction, the feed axis F1 may be the Z-axis or an imaginary axis that interpolates among the X-axis, the Y-axis, and the Z-axis. When the tool post 20 does not move in the Z-axis direction and the headstock 10 moves in the Z-axis direction, the feed axis F1 interpolating the three axes may be set to drive both of the tool TO1 and the spindle 11. In any case, the direction along the feed axis F1 is the cutting direction.

The external computer 100 connected to the NC apparatus 70 may include a processor or a CPU (Central Processing Unit) 101, a semiconductor or a ROM (Read Only Memory) 102, a semiconductor or a RAM (Random Access Memory) 103, a storage device 104, an input device 105, a display device 106, a sound device 107, an I/F (Interface) 108, and a timer circuit 109. The storage device 104 may store a control program. The CPU 101 may read the program into the RAM 103 for execution by the CPU 101. The storage device 104 may include a semiconductor memory such as a flash memory and a magnetic recording medium such as a hard disc. The input device 105 may include a pointing device, a keyboard, and a touch panel attached to the surface of the display device 106. The I/F 108 may be wired or wirelessly connected to the NC apparatus 70 to exchange data therewith. The computer 100 and the machine tool 1 may be connected via internet or via intranet such as a network. The computer 100 may include a personal computer including a tablet terminal and a mobile phone including a smart phone.

FIG. 2 schematically shows an electrical circuit configuration of the machine tool 1. The NC apparatus 70 may be connected to an operation unit 80, the rotation driving unit U1 for the spindle 11, the headstock driving unit 14, and the feed driving unit U2 for the tool post 20. The rotation driving unit U1 may include the motor 13A and a not-shown servo amplifier to rotate the front spindle 11A. The rotation driving unit U1 may further include the motor 13B and a not-shown servo amplifier to rotate the back spindle 11B. The headstock driving unit 14 may include the front headstock driving unit 14A and the back headstock driving unit 14B. The feed driving unit U2 may include servo amplifiers 31 and 32 and servo motors 33 and 34. The NC apparatus 70 may include a processor or a CPU 71, a semiconductor or a ROM 72, a semiconductor or a RAM 73, a timer circuit 74, and an I/F 75. The NC apparatus 70 may be a kind of a computer. The I/F 75 may represent interfaces of the operation unit 80, the rotation driving unit U1, the headstock driving unit 14, the feed driving unit U2, and the computer 100. The ROM 72 may store a control program PR1 for execution of a machining program PR2 and a support program PR3 for creation of the machining program PR2. The ROM 72 may be a rewritable semiconductor memory. The RAM 73 may store the machining program PR2 in a rewritable manner. The machining program may be called an NC program. The CPU 71 may use the RAM 73 as a work area and execute the control program PR1 to achieve functions of the NC apparatus 70. Part or all of the functions of the control program PR1 may be achieved by other means such as ASIC (Application Specific Integrated Circuit).

The operation unit 80 may include an input unit 81 and a display unit 82 serving as a user interface of the NC apparatus 70. In the embodiment, the display unit 82 is an example of the display unit U3 while the NC apparatus 70 and the input unit 81 may be an example of the control unit U4. The input unit 81 may include a button and a touch panel for accepting the operator's input. The display unit 82 may include a display for showing various settings by the operator and various information of the machine tool 1. The operator may use the operation unit 80 and the computer 100 to store the machining program PR2 in the RAM 73.

The feed driving unit U2 may include the servo amplifier 31 connected to the NC apparatus 70 and the servo motor 33 connected to the servo amplifier 31 to move the tool post 20 along the X-axis. The feed driving unit U2 may further include the servo amplifier 32 connected to the NC apparatus 70 and the servo motor 34 connected to the servo amplifier 32 to move the tool post 20 along the Y-axis.

The servo amplifier 31 may control the position and the feed speed of the tool post 20 in the X-axis direction. The servo amplifier 32 may control the position and the feed speed of the tool post 20 in the Y-axis direction. The servo motor 33 may be provided with an encoder 35. The servo motor 33 may rotate in response to an instruction from the servo amplifier 31 to feed the tool post in the X-axis direction through a not-shown feed mechanism and a guide. The servo motor 34 may be provided with an encoder 36. The servo motor 34 may rotate in response to an instruction from the servo amplifier 32 to feed the tool post in the Y-axis direction through a not-shown feed mechanism and a guide. The feed mechanism may be a bolt mechanism. The guide may be a slide guide using a dovetail groove.

The NC apparatus 70 may issue a position instruction to the servo amplifiers 31 and 32 to feed the tool post 20. Upon receiving an X-axis position instruction from the NC apparatus 70, the servo amplifier 31 may acquire a position feedback from an output of the encoder 35 of the servo motor 33, modify the position instruction according to the position feedback, and then output a torque command to the servo motor 33. The NC apparatus can thereby control the position of the tool post 20 to be fed along the X-axis. In other words, the NC apparatus can thereby control the position of the tool TO1 to be fed along the X-axis. Upon receiving a Y-axis position instruction from the NC apparatus 70, the servo amplifier 32 may acquire a position feedback from an output of the encoder 36 of the servo motor 34, modify the position instruction according to the position feedback, and then output a torque command to the servo motor 34. The NC apparatus can thereby control the position of the tool post 20 to be fed along the Y-axis. In other words, the NC apparatus can thereby control the position of the tool TO1 to be fed along the Y-axis.

The headstock driving unit 14 may be provided with a not-shown servo amplifier and a not-shown servo motor. The front headstock driving unit 14A may move the front headstock 10A in the Z-axis direction through a not-shown feed mechanism and a guide. The back headstock driving unit 14B may move the back headstock 10B in the Z-axis direction through a not-shown feed mechanism and a guide.

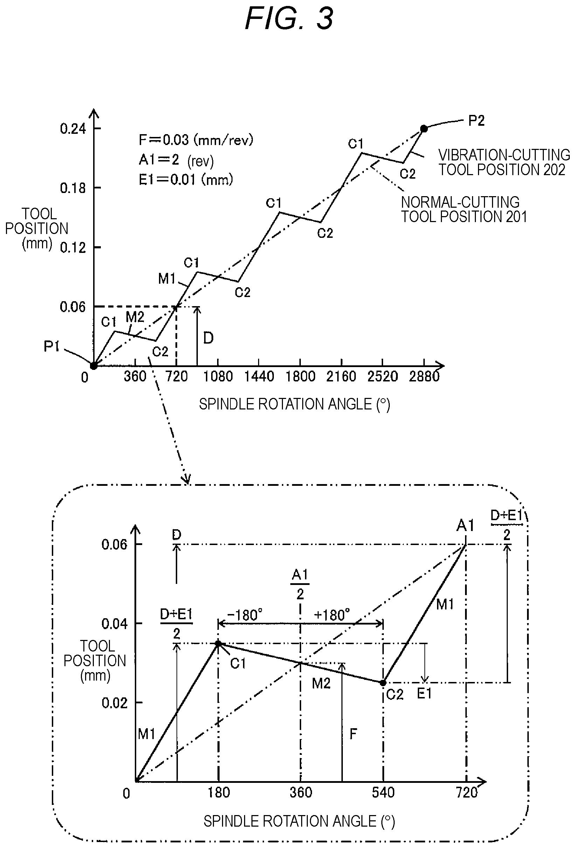

Cutting the workpiece W with the tool TO1 produces swarf or chips. Cutting into the workpiece W rotated around the spindle axis AX1 without vibration control of the tool TO1 along the feed axis F1 undesirably produces so long swarf as severely affecting machining performance. As shown in FIG. 3, the vibration-cutting that repeats the advancing feed and the returning feed of the tool TO1 along the feed axis F1 breaks up swarf into small pieces. The breaking-up performance depends on plural factors such as the phase of the spindle 11, the amplitude of the vibration, the feed speed in the advancing feed, and the feed speed in the returning feed.

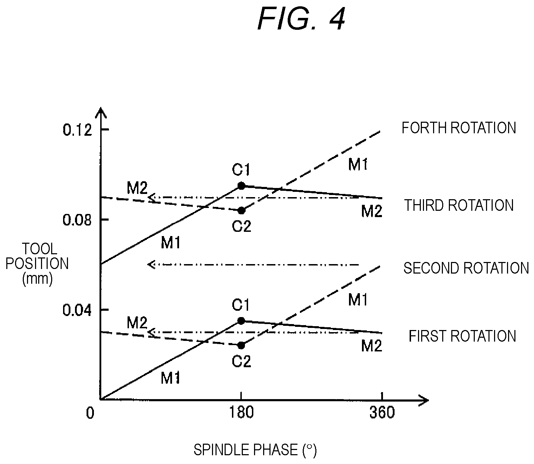

FIG. 3 schematically shows a tool position with respect to a spindle rotation angle in the case that the chip length coefficient A equals two. The chip length coefficient is an example of the first parameter regarding a cycle of the vibration. The chip length coefficient means the number of rotations of the spindle 11 (the front spindle 11A or the back spindle 11B) required for a single cycle of the vibration, which corresponds to the number of rotations of the spindle required for a single air-cutting. The air-cutting means that the tool TO1 misses the workpiece W due to vibration of the tool TO1. The air-cutting of the tool is herein simply called the air-cutting. The spindle rotation angle represents a rotation angle of the spindle 11, while the rotation angle of the spindle 11 is zero degree when the tool TO1 is in a current position P1. The tool position represents a controlled position of the tool TO1 in the cutting direction (the feed axis F1), while the tool position is zero when the tool TO1 is in the current position P1. A two-dot chain straight line extending from the current position P1 to an end position P2 represents a tool position in normal-cutting 201. A solid polygonal line extending from the current position P1 to the end position P2 represents a tool position in vibration-cutting 202. FIG. 3 further shows an expanded view of the tool position with respect to the spindle rotation angle per vibration cycle. The tool positions shown in FIG. 3 are the controlled positions by the NC apparatus 70. Actual positions may deviate from the shown positions due to delayed responses of the servo mechanisms and other factors. This remark applies to the tool positions shown in FIG. 4 to FIG. 8. Numerical values are examples only.

The vibration of the tool positions shown in FIG. 3 represents that the advancing feed M1 and the returning feed M2 are alternately repeated. The advancing feed M1 represents a feed of the tool TO1 in the direction toward the workpiece W1 along the cutting direction. The returning feed M2 represents a feed of the tool TO1 in a direction opposite to the direction of the advancing feed M1. The NC apparatus 70 controls the tool TO1 to be fed with the vibration to cut the workpiece W. The vibration includes the cutting feed M1 and the returning feed M2. The solid polygonal line of the tool position with respect to the spindle rotation angle includes a first change point C1 and a second change point C2. The first change point C1 represents a point that the advancing feed M1 changes to the returning feed M2. The second change point C2 represents a point that the returning feed M2 changes to the advancing feed M1. FIG. 3 shows the tool position with respect to the spindle rotation angle, representing a waveform of the normal-cutting feed on which a vibration of triangular wave is laid.

In FIG. 3, the normal-cutting feed speed F represents a feed speed of the tool TO1 in normal-cutting (not in vibration-cutting) or the feed speed without the vibration in a unit of mm/rev, millimeters per rotation of the spindle. The chip length coefficient A1 represents the number of rotations of the spindle 11 required for a single vibration cycle of the tool TO1. It is a vibration cycle represented by the number of rotations of the spindle in a unit of rev, which may be any positive value other than at least one rev. An advancing amount D represents the distance of a change in the position of the tool TO 1 per vibration cycle in a unit of mm, representing a relative end point of each advancing feed M1 (the position of the first change point C1). The returning amount E1 represents a distance of the returning feed M2 per vibration cycle in a unit of mm, representing a relative end point of each returning feed M2 (the position of the second change point C2). The moving distance of the tool TO1 per vibration cycle may equal to a distance of D + E1. In the case of A1 > 1, the single vibration cycle of the tool TO1 may include the advancing feed M1 of a distance of (D + E1)/2, then the returning feed M2 of the returning amount E1, and finally the advancing feed M1 of a distance of (D + E1)/2.

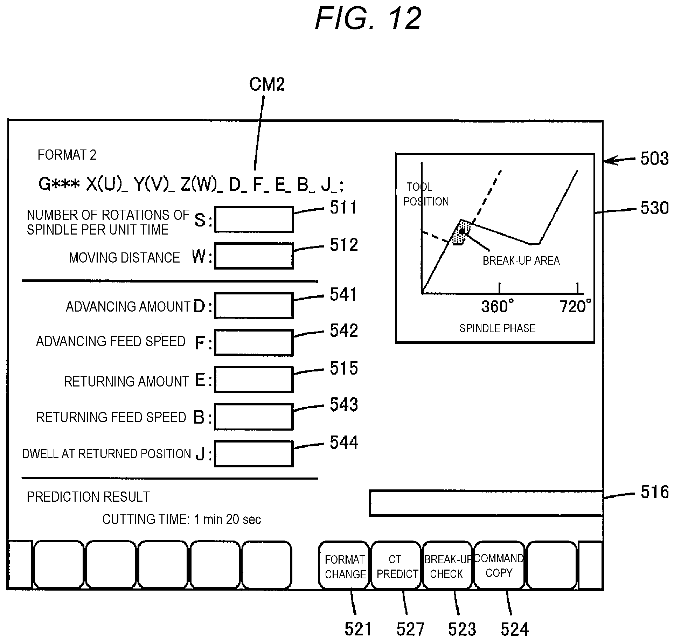

Controlling the position of the tool TO1 in vibration-cutting needs the feed speed of the advancing feed (an advancing feed speed Fd) of the tool TO1 and the feed speed of the returning feed (a returning feed speed B) of the tool TO1. The machining program PR2 may contain a vibration feed command CM2 specifying the advancing feed speed Fd and the returning feed speed B as shown in FIG. 12. The vibration feed command has at least a format of "G*** X(U)_Y(V)_Z(W)_D**_F**_E**_B**_J**" where the "G***" represents the number of the vibration feed command, the "X(U)_Y(V)_Z(W)" represents the position of the end point P2, the "D**" represents the advancing amount D, the "F**" represents the advancing feed speed Fd, the "E**" represents the returning amount E1, the "B**" represents the returning feed speed B, and the "J**" represents a standby time at the returned position (a dwell in FIG. 12). Setting the vibration conditions requires a trial and error adjustment of such many parameters as at least the advancing amount D, the advancing feed speed Fd, the returning amount E1, and the returning feed speed B.

The embodiment eliminates the need of such trial and error adjustment of the parameters. In the embodiment, the operator can only specify the "normal-cutting feed speed F," the "chip length coefficient A1" and the "returning amount E1" to set the vibration conditions, the details of which is being described.

FIG. 3 schematically shows an example of setting the first change point C1 and the second change point C2 in a single vibration cycle in the case of A1 = 2. FIG. 4 schematically shows the tool position with respect to the spindle phase in the case of A1 = 2. The tool positions in even numbered rotations are shown by a broken line for ease of understanding. In setting the parameters Fd, B, D, and E1, a smaller value is desired to reduce burden on the feed-and-guide mechanism. The hill (the first change point C1) of the moving path of the tool TO1 may match the valley (the second change point C2) thereof in the spindle phase to efficiently make the air-cutting happen. For example, the hill may be set at the spindle rotation angle calculated by subtracting 180 degrees from the spindle rotation angle at the middle (A1/2) of the single vibration cycle. The valley may be set at the spindle rotation angle calculated by adding 180 degrees to the spindle rotation angle at the middle (A1/2) of the single vibration cycle. In the case of A1 = 2, the hill may be set at the spindle rotation angle of (2/2) × 360 - 180 = 180° while the valley at the spindle rotation angle of (2/2) × 360 + 180 = 540°. The spindle phases of the hill and the valley thereby match as shown in FIG. 4. The difference of the spindle rotation angles between the hill and the valley may be 360 degrees. The returning amount E1 may be greater than zero. That brings the valley (the second change point C2) of the even numbered rotation to be in a retracted position slightly further than the preceding hill (the first change point C1) of the odd numbered rotation, thus efficiently facilitating breaking-up of chips into small pieces. Constant change in the tool position in the cutting feed further improves breaking-up performance.

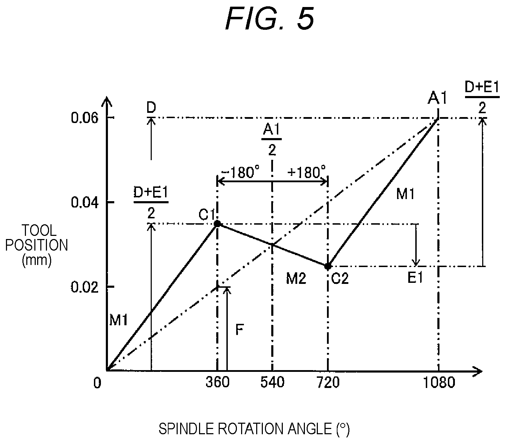

FIG. 5 schematically shows the tool position with respect to the spindle rotation angle in the case of A1 = 3. The hill may be set at the spindle rotation angle of (3/2) × 360 - 180 = 360° while the valley at the spindle rotation angle of (3/2) × 360 + 180 = 720°. The spindle phases of the hill and the valley thereby match, thus facilitating breaking-up of chips into small pieces. The "chip length coefficient A1" may be greater than one but not limited to the integer. The hill and the valley can be similarly set in the case of A1 > 3, 2 < A1 < 3, or 1 < A1 < 2. Recommendation of A1 is two or greater since the advancing feed speed Fd can excessively increase in the case of 1 < A1 < 2.

Though not shown in the figures, the valley (the second change point C2) may be set at the spindle rotation angle of minus 180 degrees from the spindle rotation angle at the middle (A1/2) of a single vibration cycle while the hill (the first change point C1) at the spindle rotation angle of plus 180 degrees to the spindle rotation angle at the middle (A1/2) of the single vibration cycle. In the case of A1 > 1, the NC control apparatus 70 may control the difference of the spindle rotation angle between the first change point C1 and the second change point C2 to be 360 degrees, where the first change point C1 is a point that the advancing feed M1 changes to the returning feed M2 in a single vibration cycle while the second change point C2 is a point that the returning feed M2 changes to the advancing feed M1 in the single vibration cycle.

In the case of A1 > 2, the valley or the hill may be set at the spindle rotation angle of minus 360 degrees from the spindle rotation angle at the middle (A1/2) of a single vibration cycle while the hill or the valley may be set at the spindle rotation angle of plus 360 degrees to the spindle rotation angle at the middle (A1/2) of the single vibration cycle. In the case of A1 > 3, the valley or the hill may be set at the spindle rotation angle of minus 540 degrees from the spindle rotation angle at the middle (A1/2) of a single vibration cycle while the hill or the valley may be set at the spindle rotation angle of plus 540 degrees to the spindle rotation angle at the middle (A1/2) of the single vibration cycle. Most desirably, the valley or the hill may be set at the spindle rotation angle of minus 180 degrees from the spindle rotation angle at the middle (A1/2) of a single vibration cycle while the hill or the valley may be set at the spindle rotation angle of plus 180 degrees to the spindle rotation angle at the middle (A1/2) of the single vibration cycle. Such embodiment can reduce the number of spindle rotations required to break up the chips and further break up the chips into smaller or fine pieces.

The NC apparatus 70 may control the moving amount of the tool TO1 per rotation of spindle to be totally equal to the normal-cutting feed speed F, which is the moving amount of the tool TO1 in normal-cutting. The NC apparatus 70 can thereby feed the tool TO1 along the cutting direction (the feed axis F1) at the same speed as the command speed for normal cutting. The chip length coefficient A1 may be equal to the number of rotations of the spindle 11 required for a single vibration cycle of the tool TO1. Then, the moving amount of the tool TO1 along the cutting direction in a single vibration cycle may be calculated by "A1 × F". As shown in FIG. 3 and FIG. 5, the NC apparatus 70 may control the tool TO1 in a single vibration cycle in the particular order of the advancing feed M1 of the distance (D + E1)/2, the returning feed M2 by the returning amount E1, and the advancing feed M1 of the distance (D + E1)/2. The following formula may be thereby established: $A 1 \times F = \left\{\left(D+E1\right)/2\right\} \times 2 - E 1$ Accordingly, the advancing amount D may be represented by: $D = A 1 \times F$ (1)

The advancing feed speed Fd of the tool TO1 may be represented by: $\begin{matrix}Fd = \left\{\left(D+E1\right)/2\right\} / \left\{\left(A1-1\right)/2\right\} \\ = \left(D+E1\right) / \left(A1-1\right) \\ = \left(A1\times F+E1\right) / \left(A1-1\right)\end{matrix}$ (2) where the advancing feed speed Fd is the maximum feed speed (Fmax) of the tool TO1. The returning feed speed B of the tool TO1 may be represented by: $\begin{matrix}B = E 1 / 1 \\ = E 1\end{matrix}$ (3)

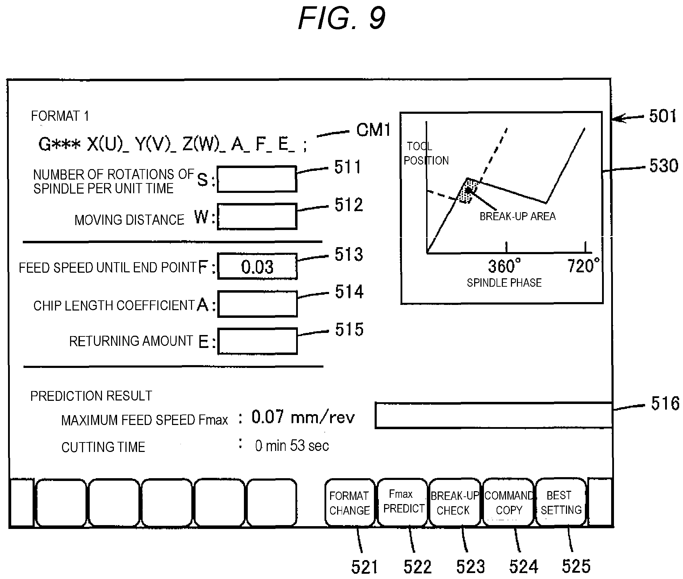

In the case of A1 > 1, upon receiving the "normal-cutting feed speed F", the "chip length coefficient A1", and the "returning amount E1" in the cutting direction (the feed axis F1), the NC apparatus 70 can calculate the advancing amount D, the advancing feed speed Fd, and the returning feed speed B according to the formulas (1), (2), and (3). The NC apparatus 70 then controls the position of the tool TO1 to be fed along the cutting direction according to the calculated values. The machining program PR2 may contain a vibration feed command CM1 shown in FIG. 9, specifying the "normal-cutting feed speed F", the "chip length coefficient A1", and the "returning amount E1". The vibration feed command has at least a format of "G*** X(U)_Y(V)_Z(W)_A**_F**_E**" where the "G***" represents the number of the vibration feed command, the "X(U)_Y(V)_Z(W)" represents the position of the end point P2, the "A**" represents the chip length coefficient A1, the "F**" represents the normal-cutting feed speed F (the feed speed until the end point in FIG. 9), and the "E**" represents the returning amount E1.

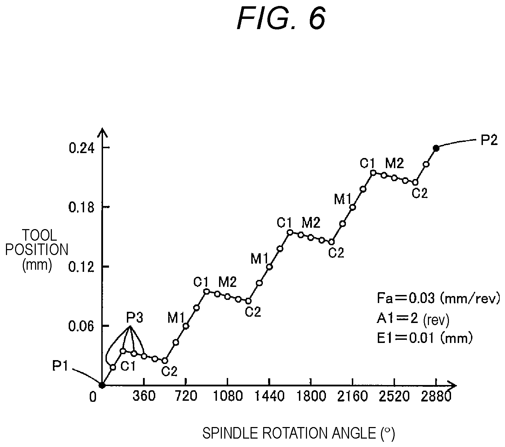

FIG. 6 shows the tool position with respect to the spindle rotation angle that the NC apparatus 70 controls according to the calculated values D, Fd, and B from the vibration feed command CM1. The NC apparatus 70 may set a plurality of positions P3 along the cutting direction (the feed axis F1) between the current position P1 and the end position P2 according to the calculated values D, Fd, and B. The NC apparatus 70 outputs a position instruction to the servo amplifier 31 or 32 to sequentially move the tool TO1 to the positions P3 by repeating the advancing feed M1 and the returning feed M2. The positions P3 are shown by white dots in FIG. 6. The positions P3 may include the change points (the first change point C1 and the second change point C2), the end point P2, and any intermediate point during the advancing feed M1 and the returning feed M2. The NC apparatus 70 repeats the position instruction described above to control the position of the tool TO1 according to the calculated values D, Fd, and B.

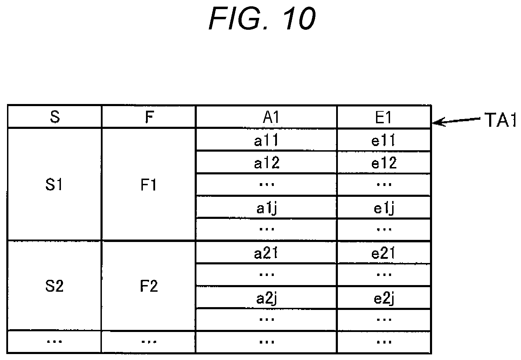

The embodiment thus allows a vibration-cutting to be done at the same machining speed as a normal-cutting only by specifying the "normal-cutting feed speed F," the "chip length coefficient A1," and the "returning amount E1" in the machining program PR2. A greater value of the "chip length coefficient A1" makes the chips longer while makes the amplitude smaller. Desired values for the "chip length coefficient A1" and the "returning amount E1" depend on following property of the servo mechanisms for driving the tool TO1. They also depend on the number of rotations of the spindle per unit time and the feed speed of the tool TO1. FIG. 10 is an information table TA1 showing recommended values of a combination of the "chip length coefficient A1" and the "returning amount E1" associated with a combination of the "number of rotations of the spindle per unit time S" and the "normal-cutting feed speed F". The table facilitates the operator's setting of the parameters. The table TA1 provides a plurality of combinations A1 and E1 associated with a single combination of S and F. Assuming that the combinations A1 and E1 respectively have an identification number "j," the plurality of combinations represented by "A1 = a1j and E1 = e1j" may be associated with the single combination "S = S1 and F = F1". FIG. 10 shows recommended combinations of the "chip length coefficient A1" and the "returning amount E1" in response to the inputs of the "number of rotations of the spindle per unit time S" and the "normal-cutting feed speed F". The number of combinations of A1 and E1 may be limited.

Accordingly, a recommended combination of the "chip length coefficient A1" and the "returning amount E1" can be selected referring to the information table TA1 according to the "number of rotations of the spindle per unit time S" and the "normal-cutting feed speed F". The RAM 73 may store the information table TA1 as described below referring to FIG. 9. Then the NC apparatus 70 can present recommended values of the "chip length coefficient A1" and the "returning amount E1" according to the "number of rotations of the spindle per unit time S" and the "normal-cutting feed speed F".

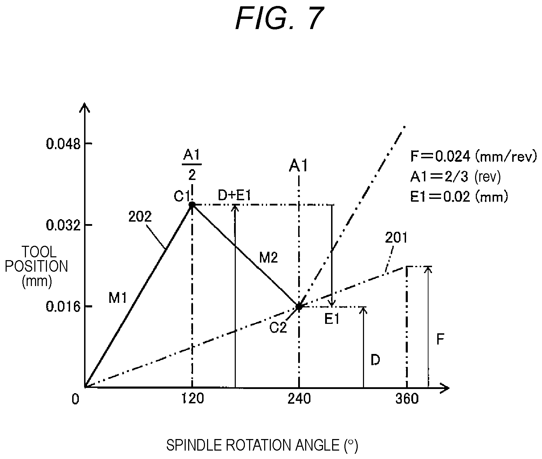

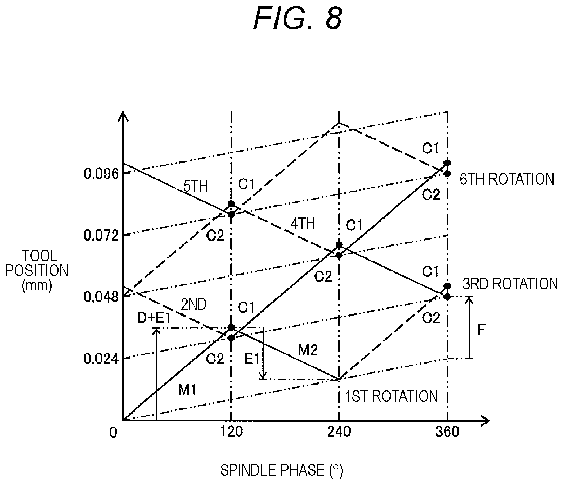

FIG. 7 schematically shows the tool position with respect to the spindle rotation angle in the case of A1 = 2/3. In the case of 0 < A1 <1, the NC apparatus 70 may control the position of the tool TO1 in a single vibration cycle in the particular order of the advancing feed M1 of distance (D + E1) on the first half and the returning feed M2 of the returning amount E1 on the second half. FIG. 8 schematically shows the tool position with respect to the spindle phase in the case of A1 = 2/3. In the case of 0 < A1 <1, the "chip length coefficient A1" may be desirably set to A1 = 2/3, A1 = 2/5, A1 = 2/7, and so on to efficiently make the air-cutting happen. Specifically, the denominator may be an odd number of three or more while the numerator may be two. The hill (the first change point C1) of the moving path of the tool TO1 may desirably match the valley (the second change point C2) thereof in the spindle phase. For example, the hill may be set at the spindle rotation angle at the middle (A1/2) of the single vibration cycle. The valley may be set at the spindle rotation angle at the end (A1) of the single vibration cycle. In the case of A1 = 2/3, the hill may be set at the spindle rotation angle of (2/3)/2 × 360 = 120° while the valley at the spindle rotation angle of (2/3) × 360 = 240° to match the spindle phases of the hill and the valley as shown in FIG. 8. The hill and the valley may match at the spindle phases of 120°, 240°, and 360°.

In the case of A1 = 2/5. The hill may be set at the spindle rotation angle of (2/5) / 2 × 360 = 72° while the valley at the spindle rotation angle of (2/5) × 360 = 144° to match the spindle phases of the hill and the valley. The hill and the valley may match at the spindle phases of 72°, 144°, 216°, 288°, and 360°. The "chip length coefficient A1" may be 2/7 or less. In the case of A1 < 2/3, however, the feed speed of the tool TO1 and the number of rotations of the spindle 11 per unit time would be required considerably low due to following property of the servo mechanisms. Therefore, a desired value of the "chip length coefficient A1" may be 2/3.

Though not shown in the figures, the valley may be set at the spindle rotation angle at the middle (A1/2) of the single vibration cycle while the hill may be set at the spindle rotation angle at the end (A1) of the single vibration cycle. The NC control apparatus 70 may control the difference of the spindle rotation angle between the first change point C1 and the second change point C2 to be {(A1/2) × 360} degrees when the denominator of the "chip length coefficient A1" is an odd number of three or more while the numerator is two.

The NC apparatus 70 may control the moving amount of the tool TO1 per rotation of spindle to be totally equal to the normal-cutting feed speed F, which is the moving amount of the tool TO1 in normal cutting. The NC apparatus 70 can thereby feed the tool TO1 along the cutting direction (the feed axis F1) at the same feed speed as the command speed for normal cutting. As described above, the moving amount of the tool TO1 along the cutting direction for a single vibration cycle can be calculated by "A1 × Fa". As shown in FIG. 7 and FIG. 8, the NC apparatus 70 may control the tool TO1 in a single vibration cycle in the particular order of the advancing feed M1 of the distance "(D + E1)" and the returning feed M2 by the returning amount E1. The following formula may be thereby established: $A 1 \times F = \left(D\times E1\right) - E 1$ Accordingly, the advancing amount D may be represented by: $D = A 1 \times F$ (4)

The advancing feed speed Fd of the tool TO1 may be represented by: $\begin{matrix}Fd = \left(D+E1\right) / \left(A1/2\right) \\ = 2 \left(D+E1\right) / A 1 \\ = 2 \left(A1\times F+E1\right) / A 1\end{matrix}$ (5) where the advancing feed speed Fd is the maximum feed speed (Fmax) of the tool TO1.

The returning feed speed B of the tool TO1 may be represented by: $\begin{matrix}B = E 1 / \left(A1/2\right) \\ = 2 E 1 / A 1\end{matrix}$ (6)

In the case of A1 < 1, upon receiving the "normal-cutting feed speed F", the "chip length coefficient A1", and the "returning amount E1" in the cutting direction (the feed axis F1), the NC apparatus 70 can calculate the advancing amount D, the advancing feed speed Fd, and the returning feed speed B according to the formulas (4), (5), and (6). The NC apparatus 70 can then control the position of the tool TO1 to be fed along the cutting direction according to the calculated values. As shown in FIG. 6, the NC apparatus 70 may set a plurality of positions P3 along the cutting direction between the current position P1 and the end position P2 according to the calculated values D, Fd, and B. The NC apparatus 70 outputs a position instruction to the servo amplifier 31 or 32 to sequentially move the tool TO1 to the positions P3. The NC apparatus 70 repeats the position instruction described above to control the position of the tool TO1 according to the calculated values D, F, and B.

The feed speed of the tool TO1 is one of the important conditions to be considered in selecting the tool TO1 to prevent a breakage or a welding thereof. A tool manufacturer generally provides an appropriate feed speed, which depends on the material of the workpiece, the material of the tool, and the type of the tool, and so on. The NC apparatus 70 executing the vibration feed command CM1 automatically calculates the parameters D, Fd, and B from the parameters F, A1, and E1 to achieve the same machining speed as in normal-cutting, which makes the calculated advancing feed speed Fd greater than the normal-cutting feed speed F. The advancing feed speed Fd, which is the maximum feed speed Fmax of the tool, is not known to the operator. The operator cannot select an adequate tool nor appropriately set the vibration-cutting parameters. The embodiment supports the operator to create the vibration feed command CM1. Specifically, a value representing the maximum feed speed Fmax according to the parameters F, A1, and E1 is shown on the display unit 82 (Fig. 2). The embodiment facilitates the selection of the tool and the setting of the parameters F, A1, and E1.

FIG. 9 schematically shows a setting screen for the vibration feed command CM1. The NC apparatus 70 displays a command creation support screen 501 upon receipt of an instruction through the input unit 81 on a not-shown menu screen. The screen 501 includes an input field for the number of rotations of the spindle per unit time 511, an input field for the moving distance 512, an input field for the feed speed until the end point 513, an input field for the chip length coefficient 514, an input field for the returning amount 515, an command input field 516, a format change button 521, a Fmax prediction button 522, a break-up check button 523, a command copy button 524, a best setting button 525, and a vibration waveform display field 530.

The operator may input the "number of rotations of the spindle per unit time S" in a unit of rev/min into the input field 511. The operator may input the "moving distance W" in a unit of mm into the input field 512. The "moving distance W" is the total distance that the tool TO1 moves along the cutting direction (the feed axis F1) from the start position to the end position during execution of the vibration feed command CM1. The "moving distance W" is not equal to the "W" in the "X(U)_Y(V)_Z(W)" specified in the vibration feed command CM1. The operator may input the "normal-cutting feed speed F" in a unit of mm/rev into the input field 513. The operator may input the "chip length coefficient A1" in a unit of rev into the input field 514, which is shown as "Chip Length Coefficient A" in FIG. 9 and FIG. 11. The operator may input the "returning amount E1" in a unit of mm into the input field 515, which is shown as "Returning Amount E" in FIG. 9 and FIG. 11. The operator may operate the best setting button 525 for a recommended value of the "chip length coefficient A1" to be shown in the input field 514 and a recommended value of the "returning amount E1" to be shown in the input field 515. The NC apparatus 70 refers to the information table TA1 stored in the RAM 73 to display the recommended values.

When the "number of rotations of the spindle per unit time S" is entered in the input field 511 and "the normal cutting feed speed F" is entered in the input field 513, the NC apparatus 70, upon receipt of an operation of the best setting button 525 through the input unit 81, refers to the information table TA1 and displays one of the combinations of the "chip length coefficient A1" and the "returning amount E1" associated with the "number of rotations of the spindle per unit time S" and "the normal cutting feed speed F". The NC apparatus 70 may sequentially display another combination of the parameters A1 and E1 upon every receipt of an operation of the best setting button 525. The NC apparatus 70 may accept the change of the "chip length coefficient A1" when a recommended value is shown in the input field 514. The NC apparatus 70 may accept the change of the "returning amount E" when a recommended value is shown in the input field 515.

Upon receipt of an operation of the Fmax prediction button 522 while the values are entered in the input fields (511 to 515), the NC apparatus 70 can display the maximum feed speed Fmax in a unit of mm/rev and the cutting time (CT) in a unit of min according to the parameters F, A1, and E1. The cutting time CT is a time required for the tool TO1 to be fed with the vibration according to the vibration feed command CM1 from the current position P1 to the end position P2 (FIG. 3). The cutting time CT may be in a unit of min when the number of rotations of the spindle per unit time S is in a unit of rev/min.

Upon receipt of an operation of the Fmax prediction button 522 through the input unit 81, the NC apparatus 70 calculates the "maximum feed speed Fmax" of the tool TO1 according to the "normal-cutting feed speed F", the "chip length coefficient A1", and the "returning amount E1" in the cutting direction (the feed axis F1).
In the case of A1 >1, the maximum feed speed Fmax may be represented by the formula (2) described above: $Fmax = \left(A1\times F+E1\right) / \left(A1-1\right)$ (7) **In** the case of A1 < 1, the maximum feed speed Fmax may be represented by the formula (5) described above: $Fmax = 2 \left(A1\times F+E1\right) / A 1$ (8)

The NC apparatus 70 further calculates the "cutting time CT" according to the "number of rotations of the spindle per unit time S", the "moving distance W", and the "normal-cutting feed speed F" in the cutting direction. The cutting time CT may be represented by: $CT = W / \left(F\times S\right)$ (9)

The NC apparatus 70 calculates the maximum feed speed Fmax by using the formula (7) or (8) and the cutting time CT by using the formula (9) to display the calculated values in a prediction result field on the screen 501. The NC apparatus 70 may display the maximum feed speed Fmax in a unit of mm/rev and the cutting time in minutes and seconds. The operator can see the predicted values representing the maximum feed speed Fmax and the cutting time CT on the display unit 82, which are not known from the values entered in the input fields (511 to 515). Seeing the value representing the cutting time CT, the operator can readily determine whether the vibration feed command CM1 achieves a desired cutting time. Seeing the value representing the maximum feed speed Fmax, the operator can readily select the tool TO1 for vibration-cutting and set the parameters for vibration-cutting.

The NC apparatus further displays a vibration waveform of the tool position with respect to the spindle phase on the vibration waveform display field 530 according to the parameters F, A1, and E1. A chip break-up area is shown by vibration waveforms overlapping at the different spindle rotation angles.

The operator can input the vibration feed command CM1 into the command input field 516 by operating the command copy button 524. Upon receipt of the operation of the button 524 through the input unit 81, the NC apparatus 70 creates the vibration feed command CM1 according to the parameters F, A1, and E1 and display the created command in the input field 516. The NC apparatus then incorporates the vibration feed command CM1 entered in the input field 516 into the machining program PR2.

The operator may modify the predicted value of the maximum feed speed Fmax to match the cutting conditions of the tool TO1. For example, the operator may reduce the maximum feed speed Fmax not to exceed the upper limit of the tool TO1 at hand. The operator may reduce the maximum feed speed Fmax to improve the life of the tool or to improve the surface roughness of the workpiece W. Reducing the maximum feed speed Fmax prolongs the cutting time CT. The operator may increase the maximum feed speed Fmax within the upper limit of the tool TO1 to shorten the cutting time CT. The operator wants to know how the cutting time CT changes according to a change in the maximum feed speed Fmax.

The embodiment allows the NC apparatus 70 to display another screen 502 (FIG. 11) on the display unit 82 to permit a change of the predicted value of the maximum feed speed Fmax, thus facilitating the change of the maximum feed speed Fmax.

FIG. 11 schematically shows the screen 502 accepting a change of the maximum feed speed Fmax. The NC apparatus 70 may provide a not-shown dialog box on the screen 501 (FIG. 9) to inquire "Do you change the maximum feed speed Fmax?" along with the prediction of the maximum feed speed Fmax. Upon receipt of a switching operation through the input unit 81, the NC apparatus 70 may display the screen 502 (FIG. 11) on the display unit 82. The NC apparatus 70 may provide a not-shown screen switching button on the screen 501 (FIG. 9). Upon receipt of an operation of the button through the input unit 81, the NC apparatus 70 may display the screen 502 (FIG. 11) on the display unit 82. The screen 502 (FIG. 11) has an input field for the maximum feed speed 517 instead of the input field 513 and a F value prediction button 526 instead of the button 522. The NC apparatus 70 displays the values in the fields 511, 512, 514, and 515 that have been entered on the screen 501 (FIG. 9). The screen 502 does not have the best setting button 525. The NC apparatus 70 displays the maximum feed speed Fmax (FIG. 9) in the input field 517 and accepts an operation requesting a change of the maximum feed speed Fmax through the input unit 81. The operator can update the maximum feed speed Fmax according to the tool TO1 that is being used.

In a state that the input fields (511, 512, 517, 514, 515) have the entered values, the operator can operate the F value prediction button 526 to display the normal-cutting feed speed F and the cutting time CT in a prediction result field of the screen 502 according to the parameters Fmax, A1, and E1.

Upon receipt of an operation of the F value prediction button 526 through the input unit 81, the NC apparatus 70 calculates the "normal-cutting feed speed F" of the tool TO1 according to the "maximum feed speed Fmax", the "chip length coefficient A1", and the "returning amount E1" in the cutting direction (the feed axis F1).
In the case of A1 > 1, the normal-cutting feed speed F may be represented as follows according to the formula (7) described above: $F = \left\{Fmax\times \left(A1-1\right)-E1\right\} / A 1$ (10) **In** the case of A1 < 1, the normal-cutting feed speed F may be represented as follows according to the formula (8) described above: $F = \left(Fmax/2\right) - \left(E1/A1\right)$ (11)

The NC apparatus 70 calculates the "cutting time CT" of the vibration feed command CM1 according to the "number of rotations of the spindle per unit time S", the "moving amount W", and the updated "normal-cutting feed speed F" in the cutting direction. The cutting time CT may be represented by: $CT = W / \left(F\times S\right)$ (12) The updated "normal-cutting feed speed F" is calculated according to the updated "maximum feed speed Fmax," the "chip length coefficient A1", and the "returning amount E1". The updated cutting time CT is calculated according to the updated "maximum feed speed Fmax," the "chip length coefficient A1", and the "returning amount E1".

The NC apparatus 70 calculates the normal-cutting feed speed F by using the formulas (10) and (11) and the cutting time CT by using the formula (12) and then display the results in the prediction result field on the screen 502 (FIG. 11). The NC apparatus 70 may display a value of the updated normal-cutting feed speed F in a unit of mm/rev as the "feed speed until the end point F" and a value of the updated cutting time CT in a unit of minutes and seconds. The example shown in FIG. 9 and FIG. 11 represents that the maximum feed speed Fmax is changed from 0.07 mm/rev to 0.05 mm/rev and accordingly the normal-cutting feed speed F is changed from 0.03 mm/rev to 0.02 mm/rev. As described above, the display unit 82 shows the values representing the normal-cutting feed speed F and the cutting time CT, which are not known from the values in the input fields (511, 512, 517, 514, 515). The operator can update the maximum feed speed Fmax to be suitable for the tool TO1 that is being used. The operator can recognize the normal-cutting feed speed F. The operator can see a value representing the updated cutting time CT and thereby recognize the cutting time CT required for feeding the tool TO1 with the vibration at the updated maximum feed speed Fmax.

The operator can input the vibration feed command CM1 into the command input field 516 by operating the command copy button 524. Upon receipt of the operation of the button 524 through the input unit 81, the NC apparatus 70 creates the vibration feed command CM1 according to the updated "normal-cutting feed speed F", the "chip length coefficient A1" entered in the input field 514, and the "returning amount E1" entered in the input field 515. The NC apparatus then incorporates the vibration feed command CM1 entered in the input field 516 into the machining program PR2.

The NC apparatus 70 may provide a not-shown dialog box on the screen 502 (FIG. 11) to inquire "Do you change the normal-cutting feed speed F?" along with the prediction of the normal-cutting feed speed F. Upon receipt of a switching operation through the input unit 81, the NC apparatus 70 may display the screen 501 (FIG. 9) on the display unit 82. The NC apparatus 70 may provide a not-shown screen switching button on the screen 502 (FIG. 11). Upon receipt of an operation of the button through the input unit 81, the NC apparatus 70 may display the screen 501 (FIG. 9) on the display unit 82.

In the screen 501 (FIG. 9) or the screen 502 (FIG. 11), the operator can operate the format change button 521 to create a vibration feed command CM2. FIG. 12 schematically shows a setting screen for the vibration feed command CM2. The NC apparatus 70 displays a command creation support screen 503 on the display unit 82 upon receipt of an operation of the button 521 through the input unit 81. The screen 503 includes the input field for the number of rotations of the spindle per unit time 511, the input field for the moving distance 512, an input field for the advancing amount 541, an input field for advancing feed speed 542, the input field for the returning amount 515, an input field for the returning feed speed 543, an input field for the standby time at returned position 544, the command input field 516, the format change button 521, a cutting time prediction button 527, the break-up check button 523, the command copy button 524, and the vibration waveform display field 530.

The operator may input the "advancing amount D" in a unit of mm into the input field 541. The operator may input the "advancing feed speed Fd," which is the maximum feed speed Fmax, in a unit of mm/rev into the input field 542. The "F" shown in FIG. 12 represents the "advancing feed speed Fd", which is the maximum feed speed Fmax, not the "feed speed until the end point F". The operator may input the "returning feed speed B" in a unit of mm/rev into the input field 543. The operator may input the "standby time at returned position J" (the dwell J at the returned position in FIG. 12) in a unit of min into the input field 544.

When the values have been entered in the input fields (511, 512, 515, 541-544), the NC apparatus 70, upon receipt of an operation of the cutting time prediction button 527, displays a value representing the cutting time CT required for the tool TO1 to be fed with the vibration according to the vibration feed command CM2 from the current position to the end position.

Upon receipt of the operation of the cutting time prediction button 527 through the input unit 81, the NC apparatus 70 calculates the "cutting time CT" of the vibration feed command CM according to the "number of rotations of the spindle per unit time S", the "moving distance W", the "advancing amount D", the "advancing feed speed Fd", the "returning amount E1, the "returning feed speed B", and the "standby time at the returned position J" in the cutting direction (the feed axis F1). The cutting time CT may be represented by: $CT = \frac{\left(D+E1\right) \times W}{Fd \times S \times D} + \frac{E 1 \times W}{B \times S \times D} - \frac{E 1}{B \times S} + J \times \left(\frac{W}{D}-1\right)$ (13) The NC apparatus 70 calculates the cutting time CT by using the formula (13) and the represents a value representing the cutting time CT in a prediction result field on the screen 503 in FIG. 12.

As described above, the display unit 82 shows the value representing the cutting time CT, which are not known from the values in the input fields (511, 512, 515, 541-544). The operator can see a value representing the cutting time CT and thereby determine whether the vibration feed command CM2 achieves a desired cutting time.

The operator has no idea whether the parameters (D, Fd, E1, B, J) of the vibration feed command CM2 are set enough to break up the chips. The break-up check button 523 allows the operator to determine whether the parameters satisfy the requirement for braking up the chips. Upon receipt of an operation of the brake-up check button 523 through the input unit 81, the NC apparatus 70 may display a vibration waveform of a tool position with respect to a spindle phase according to the parameters (D, Fd, E1, B, J) on the vibration waveform display field 530. The NC apparatus may display a chip break-up area represented by vibration waveforms overlapping at the different spindle rotation angles. The operator can see the break-up area and thereby determine that the parameters (D, Fd, E1, B, J) are set enough to break up the chips. When the chip break-up area is not shown, the operator can determine that the parameters (D, Fd, E1, B, J) are not satisfactory.

Upon receipt of an operation of the format change button 521 (FIG. 12) through the input unit 81, the NC apparatus 70 displays the screen 501 (FIG. 9) on the display unit 82.

The vibration feed command CM1 has the parameters F, A1, and E1 but not the maximum feed speed (Fmax). The maximum feed speed (Fmax) is shown on the screen 501 (FIG. 9), which allows the operator to readily select the tool TO1 for vibration-cutting and to readily set the vibration-cutting parameters. The operator can change the maximum feed speed Fmax as desired (FIG. 11) and thereby see the updated normal-cutting feed speed F and the cutting time CT. The vibration feed command CM2 has the parameters D, Fd, E1, B, and J but not the cutting time CT. The cutting time CT is not known from the vibration feed command CM2 but shown on the screen 503 (FIG. 12), which allows the operator to recognize the cutting time CT of the vibration feed command CM2.

### (3) Modified embodiments

The invention may be embodied in various modifications. For example, the object that moves along the cutting direction may be the tool TO1, the spindle 11 gripping the workpiece W1 or both of the tool TO1 of the spindle 11. When the object is the spindle 11, the NC apparatus 70 may control the vibration feed of the spindle 11 along the cutting direction during cutting the workpiece W1. When the object is both of the tool TO1 and the spindle 11, the NC apparatus 70 may control the vibration feed of the tool TO1 and the spindle 11 along the cutting direction during cutting the workpiece W1.

The vibration-cutting condition setting device 3 may be provided in the computer 100 (FIG. 1). The display device 106 may be an example of the display unit U3. The CPU 101, the ROM 102, the RAM 103, the storage device 104, and the input device 105 may be an example of the control unit U4. The computer 100 containing the vibration-cutting condition setting device 3 may or may not be connected to the machine tool 1.

The value representing the updated "maximum feed speed Fmax" shown on the screen 501 (FIG. 9) may be a ratio (including a percentage) of the "maximum feed speed Fmax" to the "normal-cutting feed speed F" or a difference between the "maximum feed speed Fmax" and the "normal-cutting feed speed F", which allows the operator to relatively recognize the "maximum feed speed Fmax". The value representing the updated "normal-cutting feed speed F" shown on the screen 502 (FIG. 11) may be a ratio (including a percentage) of the updated "normal-cutting feed speed F" to the original "normal-cutting feed speed F" or a difference between the updated "normal-cutting feed speed F" and the original "normal-cutting feed speed F", which allows the operator to relatively recognize the change in the "normal-cutting feed speed F" according to the change in the "maximum feed speed Fmax". The value representing the updated "cutting time CT" shown on the screen 502 (FIG. 11) may be a ratio (including a percentage) of the updated "cutting time CT" to the original "cutting time CT" or a difference between the updated "cutting time CT" and the original "cutting time CT", which allows the operator to relatively recognize the change in the "cutting time CT" according to the change in the "maximum feed speed Fmax".

On the screen 501 (FIG. 9) or 502 (FIG. 11), the NC apparatus 70 may accept an operation of changing the cutting time CT. The NC apparatus 70 may calculate the normal-cutting feed speed F and the maximum feed speed Fmax according to the updated cutting time CT and display the calculated values on the screen 501 or 502. The NC apparatus 70 may receive an operation of a not-shown cutting time change button provided in the screen 501 or 502 through the input unit 81 to accept an input of an updated cutting time (CTa) from the operator.

The updated normal-cutting feed speed Fa may be calculated by: $Fa = \left(CTb/CTa\right) \times Fb$ (14) where the original cutting time is CTb, the updated normal-cutting feed speed is Fa, and the original normal-cutting feed speed is Fb. The NC apparatus 70 may display the calculated value in the input field 513 of the screen 501 or in the prediction result field of the screen 502.

The NC apparatus 70 can calculate the updated maximum feed speed (Fa max) by using the following formulas according to the formulas (7) and (8) described above:
In the case of A1 >1, $Fa max = \left(A1\times Fa+E1\right) / \left(A1-1\right)$ (15)
**In** the case of A1 < 1, $Fa max = 2 \left(A1\times Fa+E1\right) / A 1$ (16)
The NC apparatus 70 may display the calculated value in the prediction result field of the screen 501 or in the input field 517 of the screen 502.

The operator can see a change in the normal-cutting feed speed F and the maximum feed speed Fmax as the cutting time CT changes, which facilitates the selection of the tool TO1 for vibration-cutting and the setting of vibration-cutting parameters. The NC apparatus 70 may display the updated normal-cutting feed speed Fa on the screens 501 and 502 while not display the updated maximum feed speed Fmax. The NC apparatus 70 may display the updated maximum feed speed Fmax on the screens 501 and 502 while not display the updated normal-cutting feed speed Fa.

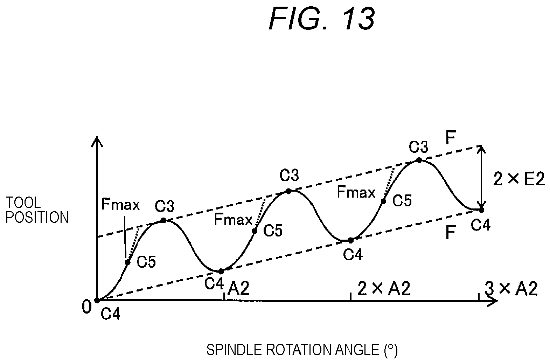

As shown in FIG. 13, the technology of the invention may be also applied to a waveform of the normal-cutting feed with an addition of a vibration of a sine wave. FIG. 13 schematically shows another example of the tool position with respect to the spindle rotation angle. A component of the normal-cutting feed speed F is shown by a broken line. The maximum feed speed Fmax is shown by a fine dot line. Removing a component of the normal-cutting feed speed F from the waveform shown in FIG. 13 produces the sine wave, whose cycle is A2 and amplitude is E2. The cycle A2 is an example of the first parameter regarding a cycle of the vibration. The amplitude E2 is an example of the second parameter regarding an amplitude of the vibration. The maximum feed speed Fmax is represented by an angle of a middle point C5 between a valley C4 and a hill C3 of the sine wave shown in FIG. 13. The maximum feed speed Fmax can be calculated by assigning a spindle rotation angle of the middle point C5 to a feed speed formula differentiating a formula that calculates a tool position from a spindle rotation angle.

The NC apparatus 70 (or the computer 100) may display a screen similar to the screen 501 (FIG. 9) on the display unit U3 to accept the normal-cutting feed speed F, the cycle A2, and the amplitude E2. The NC apparatus 70 may then calculate the maximum feed speed Fmax by using the method described above according to the parameters (F, A2, E2) and display the calculated value on the display unit U3. The operator can see the maximum feed speed Fmax, which are not known from the settings. Seeing the maximum feed speed Fmax facilitates the selection of the tool TO1 for vibration-cutting and the setting of vibration-cutting parameters.

The NC apparatus 70 may display a screen similar to the screen 502 (FIG. 11) on the display unit U3. The NC apparatus 70 may update the normal-cutting feed speed F by inversing the calculation described above according to the updated maximum feed speed Fmax, the cycle A2, and the amplitude E2. The NC apparatus 70 may calculate the cutting time CT by using the formula (12) and display the updated normal-cutting feed speed F and the cutting time CT on the display unit U3. The operator can see the updated normal-cutting feed speed F and the cutting time CT, which facilitate the setting of the parameters such as the normal-cutting feed speed F.

### (4) Conclusion

As described above, the invention can provide technology of the machine tool capable of facilitating the selection of the tool for vibration-cutting and the setting of the vibration cutting conditions. The technology only consisting of the elements of independent claim 1 can provide the function and the effect described above.

### DESCRIPTION OF SYMBOLS

1:Machine tool, 3: Vibration-cutting condition setting device, 10: Headstock, 11: Spindle,
12: Gripping part, 13A, 13B: Moror, 14: Headstock driving unit,
20: Tool post, 31,32: Servo amplifier,
33,34: Servo Motor, 35,36: Encoder,
70: NC apparatus, 80: Operating unit, 81 Input unit, 82:: Display unit
100: Computer, 201: Normal-cutting tool position,
202: Vibration-cutting tool position, AX1 Spindle axis,
C1: First change point, C2 Second change point,
CM1, CM2: Vibration feed command, F1: Feed axis, M1: Advancing feed,
M2: Returning Feed, P1: Current position, P2: End point, P3: Position,
PR1: Control program, PR2: Machining program,
PR3: Support program, TO1: Tool, U1: Rotation driving unit,
U2: Feed driving unit, U3: Display unit, U4: Control unit, W1 Workpiece.

## Claims

1. An arrangement of a vibration-cutting condition setting device (3) and a machine tool (1), the machine tool (1) is provided with a rotation driving unit (U1) adapted to rotate a spindle (11) gripping a workpiece (W1) and a feed driving unit (U2) adapted to feed an object, the object being at least one of the spindle (11) and a tool (TO1) for cutting the workpiece (W1), the machine tool (1) controlling the object to be fed with a vibration along a cutting direction (F1) to cut the workpiece (W1), the vibration comprising an advancing feed (M1) of the object in a direction toward the workpiece (W1) and a returning feed (M2) of the object in a direction opposite to the direction of the advancing feed (M1); the vibration-cutting condition setting device (3) comprising:
a display unit (U3); and
a control unit (U4) adapted to accept a setting for controlling the object to be fed with the vibration, the setting comprising a feed speed without the vibration (F) of the object, a first parameter (A) regarding a cycle of the vibration, and a second parameter (E) regarding an amplitude of the vibration;
wherein the control unit (U4) is further adapted to calculate a maximum feed speed (Fmax) of the object according to the feed speed without the vibration (F), the first parameter (A), and the second parameter (E) and adapted to then display a value representing the calculated maximum feed speed (Fmax) on the display unit (U3), wherein the control unit (U4) is further adapted to accept an operation for changing the maximum feed speed (Fmax) displayed on the display unit (U3), to change the feed speed without the vibration (F) according to the updated maximum feed speed (Fmax), the first parameter (A), and the second parameter (E), and to then display a value representing the updated feed speed without the vibration (F) on the display unit (U3).

2. The arrangement of claim 1, wherein the control unit (U4) is further adapted to accept an operation for changing the maximum feed speed (Fmax) displayed on the display unit (U3), to calculate a cutting time (CT) required for the object to be fed with the vibration at the updated maximum feed speed (Fmax) according to the updated maximum feed speed (Fmax), the first parameter (A), and the second parameter (E), and to then display a value representing the calculated cutting time (CT) on the display unit (U3).

3. The arrangement of any of claims 1 or 2, wherein the control unit (U4) is further adapted to accept an operation for changing the cutting time (CT), changes at least one of feed speed parameters of the feed speed without the vibration (F) and the maximum feed speed (Fmax) according to the updated cutting time (CT), and to then display a value representing the updated feed speed parameter on the display unit (U3).

## Patentansprüche

1. Anordnung aus einer Vorrichtung zur Einstellung der Vibrationsschneidebedingung (3) und einer Werkzeugmaschine (1),
wobei die Werkzeugmaschine (1) mit einer Rotationsantriebseinheit (U1), die dazu eingerichtet ist, eine ein Werkstück (W1) greifende Spindel (11) zu drehen, und einer Vorschubantriebseinheit (U2), die dazu eingerichtet ist, ein Objekt vorzuschieben, versehen ist, wobei das Objekt mindestens eines aus der Spindel (11) und einem Werkzeug (TO1) zum Schneiden des Werkstücks (W1) ist, wobei die Werkzeugmaschine (1) das Objekt so steuert, dass es mit einer Vibration entlang einer Schneidrichtung (F1) vorgeschoben wird, um das Werkstück (W1) zu schneiden, wobei die Vibration einen Vorwärtsvorschub (M1) des Objekts in einer Richtung zum Werkstück (W1) hin und einen Rücklaufvorschub (M2) des Objekts in einer der Richtung des Vorwärtsvorschubs (M1) entgegengesetzten Richtung umfasst; wobei die Vorrichtung zur Einstellung der Vibrationsschneidebedingung (3) umfasst:
eine Anzeigeeinheit (U3); und
eine Steuereinheit (U4), die dazu eingerichtet ist, eine Einstellung zum Steuern des Objekts derart entgegenzunehmen, dass es mit der Vibration vorgeschoben wird, wobei die Einstellung eine Vorschubgeschwindigkeit ohne Vibration (F) des Objekts, einen ersten Parameter (A) bezüglich eines Zyklus der Vibration und einen zweiten Parameter (E) bezüglich einer Amplitude der Vibration umfasst;
wobei die Steuereinheit (U4) ferner dazu eingerichtet ist, eine maximale Vorschubgeschwindigkeit (Fmax) des Objekts gemäß der Vorschubgeschwindigkeit ohne Vibration (F), dem ersten Parameter (A) und dem zweiten Parameter (E) zu berechnen und anschließend einen Wert, der die berechnete maximale Vorschubgeschwindigkeit (Fmax) repräsentiert, auf der Anzeigeeinheit (U3) anzuzeigen, wobei die Steuereinheit (U4) ferner dazu eingerichtet ist, eine Bedienung zum Ändern der auf der Anzeigeeinheit (U3) angezeigten maximalen Vorschubgeschwindigkeit (Fmax) entgegenzunehmen, die Vorschubgeschwindigkeit ohne Vibration (F) gemäß der aktualisierten maximalen Vorschubgeschwindigkeit (Fmax), dem ersten Parameter (A) und dem zweiten Parameter (E) zu ändern und anschließend einen Wert, der die aktualisierte Vorschubgeschwindigkeit ohne Vibration (F) repräsentiert, auf der Anzeigeeinheit (U3) anzuzeigen.

2. Anordnung nach Anspruch 1, wobei die Steuereinheit (U4) ferner dazu eingerichtet ist, eine Bedienung zum Ändern der auf der Anzeigeeinheit (U3) angezeigten maximalen Vorschubgeschwindigkeit (Fmax) entgegenzunehmen, eine Schneidzeit (CT) zu berechnen, die erforderlich ist, um das Objekt mit der Vibration bei der aktualisierten maximalen Vorschubgeschwindigkeit (Fmax) gemäß der aktualisierten maximalen Vorschubgeschwindigkeit (Fmax), dem ersten Parameter (A) und dem zweiten Parameter (E) vorzuschieben, und anschließend einen Wert, der die berechnete Schneidzeit (CT) repräsentiert, auf der Anzeigeeinheit (U3) anzuzeigen.

3. Anordnung nach einem der Ansprüche 1 oder 2, wobei die Steuereinheit (U4) ferner dazu eingerichtet ist, eine Bedienung zum Ändern der Schneidzeit (CT) entgegenzunehmen, ändert mindestens einen der Vorschubgeschwindigkeitsparameter der Vorschubgeschwindigkeit ohne Vibration (F) und der maximalen Vorschubgeschwindigkeit (Fmax) gemäß der aktualisierten Schneidzeit (CT), und anschließend einen Wert, der den aktualisierten Vorschubgeschwindigkeitsparameter repräsentiert, auf der Anzeigeeinheit (U3) anzuzeigen.

## Revendications

1. Agencement d'un dispositif de réglage de conditions de coupe par vibrations (3) et d'une machine-outil (1),
dans lequel la machine-outil (1) est pourvue d'une unité d'entraînement en rotation (U1) configurée pour faire tourner une broche (11) maintenant une pièce à usiner (W1) et d'une unité d'entraînement d'avance (U2) configurée pour faire avancer un objet, l'objet étant au moins l'un parmi la broche (11) et un outil (TO1) destiné à couper la pièce à usiner (W1), la machine-outil (1) commandant l'objet de manière à le faire avancer avec une vibration le long d'une direction de coupe (F1) afin de couper la pièce à usiner (W1), la vibration comprenant une avance aller (M1) de l'objet dans une direction vers la pièce à usiner (W1) et une avance de retour (M2) de l'objet dans une direction opposée à la direction de l'avance aller (M1) ; le dispositif de réglage de conditions de coupe par vibrations (3) comprenant :
une unité d'affichage (U3) ; et
une unité de commande (U4) configurée pour accepter un réglage destiné à commander l'objet de manière à le faire avancer avec la vibration, le réglage comprenant une vitesse d'avance sans vibration (F) de l'objet, un premier paramètre (A) relatif à un cycle de la vibration et un second paramètre (E) relatif à une amplitude de la vibration ;
dans lequel l'unité de commande (U4) est en outre configurée pour calculer une vitesse d'avance maximale (Fmax) de l'objet selon la vitesse d'avance sans vibration (F), le premier paramètre (A) et le second paramètre (E), et pour afficher ensuite sur l'unité d'affichage (U3) une valeur représentant la vitesse d'avance maximale calculée (Fmax), dans lequel l'unité de commande (U4) est en outre configurée pour accepter une opération de modification de la vitesse d'avance maximale (Fmax) affichée sur l'unité d'affichage (U3), pour modifier la vitesse d'avance sans vibration (F) selon la vitesse d'avance maximale mise à jour (Fmax), le premier paramètre (A) et le second paramètre (E), et pour afficher ensuite sur l'unité d'affichage (U3) une valeur représentant la vitesse d'avance sans vibration mise à jour (F).

2. Agencement selon la revendication 1, dans lequel l'unité de commande (U4) est en outre configurée pour accepter une opération de modification de la vitesse d'avance maximale (Fmax) affichée sur l'unité d'affichage (U3), pour calculer un temps de coupe (CT) requis pour faire avancer l'objet avec la vibration à la vitesse d'avance maximale mise à jour (Fmax) selon la vitesse d'avance maximale mise à jour (Fmax), le premier paramètre (A) et le second paramètre (E), et pour afficher ensuite sur l'unité d'affichage (U3) une valeur représentant le temps de coupe calculé (CT).

3. Agencement selon l'une quelconque des revendications 1 ou 2, dans lequel l'unité de commande (U4) est en outre configurée pour accepter une opération de modification du temps de coupe (CT), modifie au moins l'un des paramètres de vitesse d'avance de la vitesse d'avance sans vibration (F) et de la vitesse d'avance maximale (Fmax) selon le temps de coupe mis à jour (CT), et pour afficher ensuite sur l'unité d'affichage (U3) une valeur représentant le paramètre de vitesse d'avance mis à jour.
